**Europäisches Patentamt**

(19) **European Patent Office**

**Office européen des brevets**

(11) Numéro de publication: **0 071 894**
**B1**

(12) **FASCICULE DE BREVET EUROPEEN**

(45) Date de publication du fascicule du brevet:
13.11.85

(51) Int. Cl.⁴: **H 02 G 15/14**

(21) Numéro de dépôt: **82106860.8**

(22) Date de dépôt: **29.07.82**

(54) Dispositif pour éviter la détérioration d'un câble de liaison sous-marine en sortie d'un boîtier, lors du passage au tambour et au davier.

(30) Priorité: **04.08.81 FR 8115111**

(43) Date de publication de la demande:
**16.02.83 Bulletin 83/7**

(45) Mention de la délivrance du brevet:
**13.11.85 Bulletin 85/46**

(84) Etats contractants désignés:
**DE FR GB IT**

(56) Documents cités:
**CH - A - 314 761**
**FR - A - 568 340**
**FR - A - 614 536**
**FR - A - 819 425**
**FR - A - 1 560 895**
**US - A - 3 786 397**

(73) Titulaire: **LES CABLES DE LYON Société anonyme dite:,**
**170 quai de Clichy, F-92111 Clichy Cedex (FR)**

(72) Inventeur: **Guazzo, Lucien, 77, rue de la Paix,**
**F-62100 Calais (FR)**
Inventeur: **Vives, Jean-Patrick, 34, rue Masséna,**
**F-62100 Calais (FR)**

(74) Mandataire: **Weinmiller, Jürgen et al, Zeppelinstrasse 63,**
**D-8000 München 80 (DE)**

BUNDESDRUCKEREI BERLIN

## Description

L'invention concerne un dispositif pour éviter la détérioration d'un câble de liaison sous-marine en sortie d'un boîtier, lors du passage au tambour et au davier, ledit câble est raccordé directement au boîtier, et le dispositif est constitué de chaque côté du boîtier par une cale entourant le câble depuis la sortie du boîtier jusqu'à un point de contact du câble avec le tambour, ladite cale étant de révolution autour du câble et ayant au repos une forme générale de poire présentant une partie renflée du côté du boîtier et occupant, lorsque le câble est enroulé sur le tambour, tout l'espace compris entre le câble et le tambour, la partie renflée de la cale ayant au repos un rayon au moins égal à la distance qui sépare le câble du tambour en sortie du boîtier, la cale présentant également une extrémité effilée ayant au point de contact, un diamètre de l'ordre de celui du câble.

Une liaison sous-marine est constituée d'un câble et de boîtiers qui sont soit des répéteurs soit des boîtes de réparations, et ces éléments, câble et boîtiers présentent parfois des diamètres très différents, ce qui crée des difficultés au cours des diverses manipulations qu'ils doivent subir. En particulier, à la sortie d'un répéteur par exemple, le câble est démuni de son armure extérieure, ce qui lui confère une certaine souplesse en sortie du boîtier, souplesse qui peut se révéler nuisible pour le câble si celui-ci est soumis, en sortie du boîtier à un effort qui lui impose une direction faisant un certain angle avec l'axe du boîtier. Ce changement brutal de direction entre la partie du câble intérieure au boîtier et dirigée selon l'axe de celui-ci, et la partie du câble extérieure au boîtier est cause de détérioration du câble, qu'il s'agisse d'un câble classique, c'est-à-dire ne comportant que des conducteurs électriques, ou d'un câble à fibres optiques.

Il est connu par le brevet français 568 340 d'équiper les extrémités de câbles, de cales de révolution présentant au repos, une forme générale de poire. Mais ces cales ne recouvrent pas entièrement la jonction de deux extrémités de câbles, après une réparation, par exemple. Pour recouvrir entièrement la jonction il faut un équipement de moulage considérable qui ne pourrait certainement pas être embarqué sur un bateau-câblier.

La présente invention permet de supprimer cet inconvénient en proposant deux cales s'emboîtant l'une dans l'autre pour recouvrir toute la jonction.

La présente invention est caractérisé en ce que les deux cales s'emboîtent l'une dans l'autre dans une partie centrale du boîtier, de sorte que les faces extérieures des cales se raccordent parfaitement dans la partie centrale.

D'autres avantages de l'invention ressortiront de la description qui va suivre d'exemples de réalisation illustrés par les figures annexées dans lesquelles:

— la figure 1 représente schématiquement un câble et un boîtier enroulés sur un tambour et illustre la mauvaise position du câble en sortie du boîtier, si aucune précaution n'est prise,

— la figure 2 représente schématiquement la position que doit prendre le câble à la sortie du boîtier, lorsqu'il est enroulé sur un tambour, pour éviter toute détérioration,

— la figure 3 représente un câble sous-marin non enroulé muni d'un dispositif connu assurant cette position souhaitée,

— la figure 4 représente le même câble sous-marin enroulé, muni du dispositif de la figure 3,

— la figure 5 représente un dispositif de l'invention monté sur un câble sous-marin non enroulé,

— la figure 6 représente un détail de la figure 5, avec arrachement partiel,

— la figure 7 représente un câble sous-marin enroulé muni du dispositif de la figure 5,

— la figure 8 représente un câble sous-marin enroulé muni d'une variante du dispositif de la figure 5,

— la figure 9 représente un câble sous-marin non enroulé muni d'une autre variante du dispositif de la figure 5,

— la figure 10 représente une cale élémentaire en variante de la figure 9.

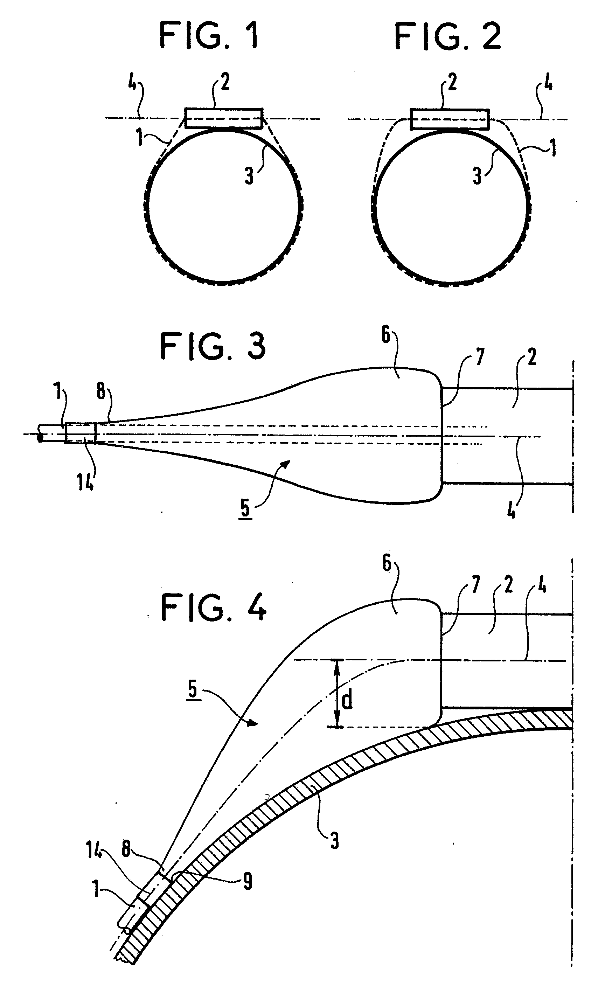

Dans la figure 1 on a représenté un câble sous-marin 1, un boîtier 2 et un tambour 3. Le câble est un câble sous-marin, le boîtier étant soit un répéteur soit une boîte de réparation; le boîtier est généralement de forme cylindrique, de longueur de l'ordre de quelques dizaines de centimètres, par exemple de cinquante centimètres et de diamètre de l'ordre de dix centimètres; le tambour a un diamètre de l'ordre de deux à trois mètres, les tambours couramment utilisés ayant des diamètres de 1,8 mètre ou de 3 mètres. Cette figure 1 illustre la position que prendrait le câble sous-marin par rapport au boîtier, de chaque côté de celui-ci, si aucune précaution n'était prise pour éviter que le câble sous-marin ne fasse un angle, en sortie du boîtier, avec l'axe longitudinal 4 de celui-ci, cet angle étant la cause de détérioration du câble sous-marin.

La figure 2 représente comme dans la figure 1 un câble sous-marin 1 et un boîtier 2 enroulés sur un tambour 3. Dans cette figure le câble sous-marin sort du boîtier selon l'axe longitudinal 4 et par une courbure progressive vient au contact du tambour. Le câble sous-marin fait donc un angle nul avec l'axe longitudinal du boîtier en sortie de celui-ci; ceci est obtenu classiquement soit par des pièces articulées telles que des cardans, soit par un renforcement extérieur du câble pour lui donner une rigidité telle qu'un rayon de courbure minimum acceptable pour le câble sous-marin soit respecté.

Bien entendu les pièces articulées ou les renforcements du câble sous-marin sont prévus de chaque côté du boîtier.

La figure 3 représente un dispositif connu monté sur un câble sous-marin non enroulé, et la figure 4 représente un câble sous-marin muni du même dispositif, enroulé sur un tambour. Un manchon 5 en matériau résistant souple, tel que par exemple du néoprène, du caoutchouc, du silicone, entoure le câble sous-marin 1. Ce manchon est de révolution et présente un trou longitudinal du diamètre du câble; il est enfilé sur le câble avant le raccordement du câble au boîtier 2, raccordement qui est effectué directement, sans utiliser de pièces articulées telles que des cardans par exemple. Le manchon a une forme de poire allongée dont la partie renflée 6 est située du côté du boîtier 2, le manchon venant au contact de l'extrémité 7 du boîtier. Une extrémité effilée 8 du manchon a un diamètre légèrement supérieur à celui du câble, alors que la partie renflée a un rayon au moins égal à la distance d séparant l'axe longitudinal 4 du boîtier du tambour, cette distance étant mesurée à l'extrémité 7 du boîtier. La longueur du manchon, depuis l'extrémité 7 du boîtier avec laquelle il est en contact jusqu'à son extrémité effilée 8 est égale à la longueur du câble sous-marin comprise entre la sortie du boîtier 2 et le point 9 du tambour auquel il vient en contact. Afin d'éviter que le manchon ne se déplace lorsque le câble est enroulé, une bague d'arrêt 14 est fixée sur le câble du côté de l'extrémité effilée 8 du manchon. Avec des tambours dont le diamètre est compris entre 1,80 mètre et 3 mètres, la longueur du manchon est de l'ordre de 60 centimètres à 1 mètre. Sur la figure 3 le manchon 5 est au repos, l'axe du câble sous-marin 1 étant dans le prolongement de l'axe longitudinal 4 du boîtier 2. Sur la figure 4, le manchon 5 est au travail; il vient s'appliquer contre le tambour 3 de sorte que grâce à sa partie renflée 6 le câble sorte du boîtier selon une direction qui est celle de l'axe longitudinal 4, et se courbe progressivement jusqu'à être en contact avec le tambour 3 au point 9, le manchon 5 étant en contact avec le tambour depuis l'extrémité 7 du boîtier jusqu'au point de contact 9. Le manchon 5 est bien entendu déformé lorsqu'il est au travail; c'est pourquoi il doit être en un matériau à la fois résistant et suffisamment souple pour se déformer sans s'écraser ce qui donnerait au câble, en sortie du boîtier, une direction faisant un angle non nul avec l'axe longitudinal du boîtier. Pour satisfaire à ces exigences le matériau constituant le manchon doit présenter une compressibilité radiale très faible et de préférence nulle, de façon à bien jouer son rôle de cale entre le câble et le tambour.

Bien entendu le câble est muni d'un tel manchon de chaque côté du boîtier 2; les manchons peuvent être fixés au câble, après raccordement du câble au boîtier, par tout moyen connu, et par exemple par collage sur le câble.

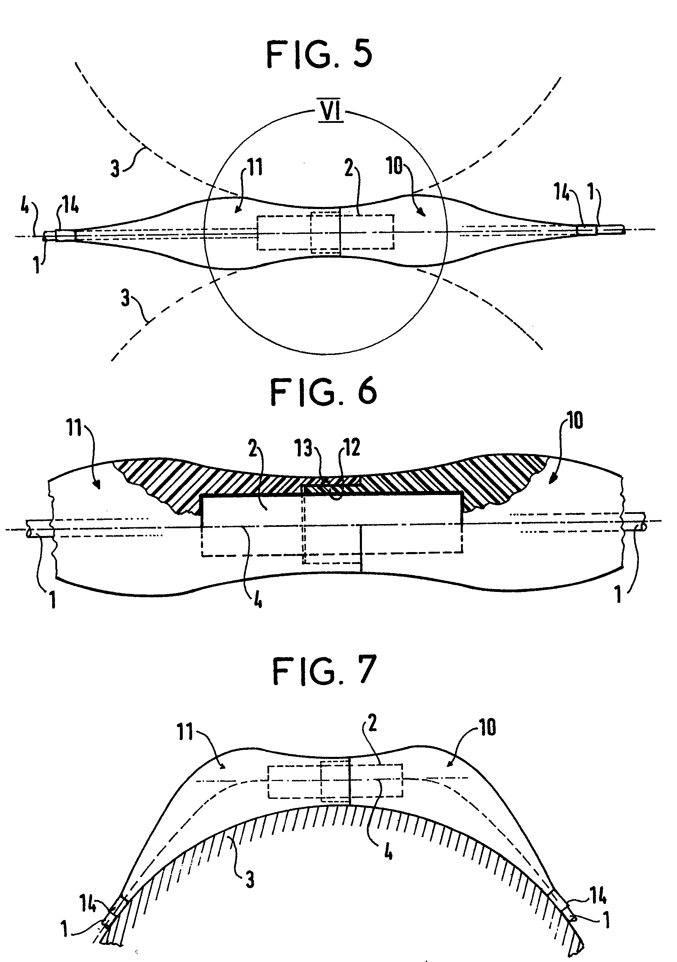

La figure 5 représente un boîtier et un manchon de chaque côté, les manchons recouvrant le boîtier et s'emboîtant l'un sur l'autre, et étant au repos c'est-à-dire câble non enroulé. La figure 6 représente à plus grande échelle l'emboîtement des manchons et la figure 7 représente le câble et les manchons de la figure 5 enroulés sur un tambour.

Dans ces figures les manchons 10 et 11 ont comme le manchon 5 de la figure 3 une forme générale de poire, mais ils ne s'arrêtent pas comme dans cette figure 3 contre l'extrémité 7 du boîtier; ils se prolongent autour du boîtier qu'ils entourent en remplissant l'espace compris entre le boîtier et le tambour 3, représenté en traits interrompus dans la figure 5 puisque cette figure représente le câble sous-marin 1, le boîtier 2 et les manchons 10 et 11 non enroulés sur le tambour, le câble étant de chaque côté du boîtier dans l'axe longitudinal du boîtier, et les manchons au repos. Les manchons 10 et 11 s'emboîtent à recouvrement l'un dans l'autre, l'extrémité 13 du manchon 11 recouvrant, dans la partie centrale du boîtier, l'extrémité 12 du manchon 10, de telle sorte que les surfaces des manchons 10 et 11 se raccordent sans décrochement dans la partie centrale du boîtier. Pratiquement les extrémités 12 et 13 auront la même épaisseur. Bien que l'épaisseur totale des extrémités 12 et 13 n'ait pas une importance particulière, elle aura, pour des raisons de fabrication, une épaisseur au moins égale au dixième du diamètre du boîtier. Les manchons 10 et 11 peuvent être ou non fixés sur le boîtier; ils peuvent être fixés par tout moyen connu, par collage par exemple, sur le câble et dans la zone de recouvrement des extrémités 12 et 13; ils peuvent être fixés par cerclage, autour du boîtier à l'aide de bandes métalliques ou non, ou collés et cerclés, afin d'être rendus solidaires du boîtier et éviter qu'ils ne se déplacent sous l'effet des efforts auxquels ils sont soumis lorsque l'ensemble câble, manchons, boîtier est enroulé sur le tambour, comme représenté figure 7.

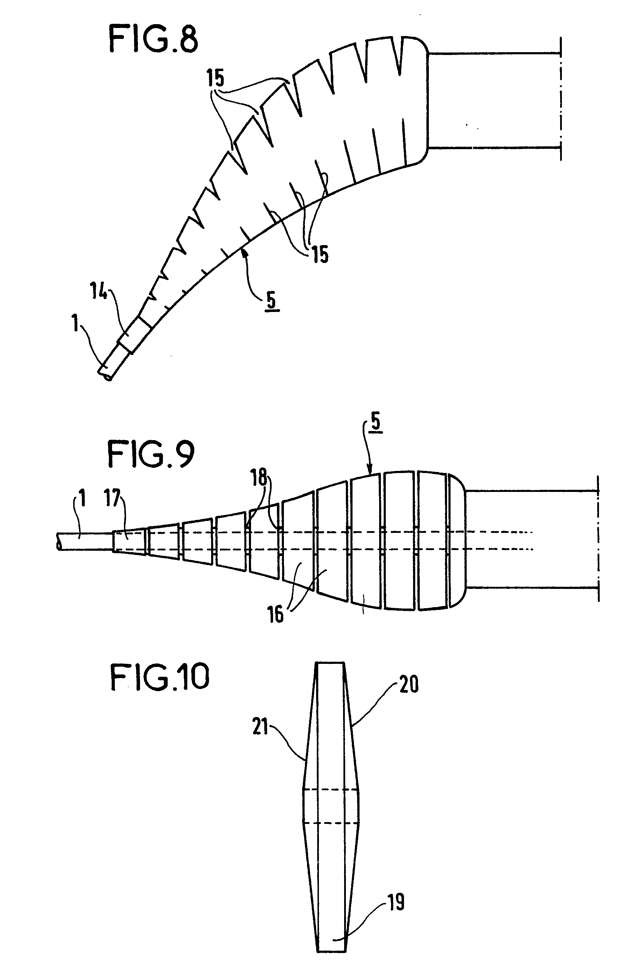

La figure 8 représente une variante du dispositif de la figure 5. Dans cette variante le manchon comporte des saignées radiales 15 dont la profondeur et la largeur sont fonction du matériau employé. Les saignées, qui sont circulaires, auront de préférence une forme en V.

Les saignées radiales ne seront pratiquées que dans la partie de chaque manchon ne recouvrant pas le boîtier.

La figure 9 représente une autre variante du dispositif de la figure 5. Dans cette variante le manchon est constitué par un empilage de rondelles 16 à faces parallèles dont le nombre est essentiellement fonction du diamètre du tambour. Bien entendu l'empilage de rondelles reconstitue le profil en forme de poire effilée. La dernière rondelle 17, de la partie effilée peut constituer la bague d'arrêt. Cette bague d'arrêt peut être fixée sur le câble de manière à ménager un jeu entre toutes les rondelles; on peut également introduire entre chaque rondelle une rondelle entretoise 18 comme représenté figure 9.

La figure 10 représente une variante d'une rondelle de la figure 9. Dans cette figure 10 la rondelle 19 n'est plus à faces parallèles mais se présente sous la forme d'un cylindre terminé de chaque côté par un tronc de cône, 20, 21, ce qui donne à l'empilage de telles rondelles une allure de manchon présentant des saignées radiales en forme de V.

Les rondelles des figures 9 et 10 ne seront utilisées que pour constituer la partie de chaque manchon ne recouvrant pas le boîtier.

Les rondelles représentées figures 9 et 10 seront soit en matériau résistant et souple, soit en métal résistant à la corrosion marine. De même dans le cas d'utilisation de rondelles entretoises celles-ci devront également être en matériau résistant à la corrosion marine.

Les manchons objet de l'invention qui doivent présenter une compressibilité radiale nulle ou très faible jouent donc le rôle de cale entre le câble et le tambour. Dans le cas des variantes illustrées par les figures 9 et 10 les rondelles constituent des câles élémentaires dont l'empilage reconstitue un manchon en forme de poire effilée.

Les cales objet de l'invention permettent la suppression de pièces articulées telles que des cardans qui sont généralement utilisés en sortie de boîtier, ce qui simplifie le raccordement et entraîne un encombrement moindre du boîtier; de plus l'emploi de cales est moins onéreux que l'emploi de cardans.

## Revendications

1. Dispositif pour éviter la détérioration d'un câble de liaison sous-marine en sortie d'un boîtier, lors du passage au tambour et au davier, ledit câble étant raccordé directement au boîtier, dispositif constitué de chaque côté du boîtier (2), par une cale (5) entourant le câble (1) depuis la sortie du boîtier jusqu'à un point de contact (9) du câble avec le tambour (3), ladite cale étant de révolution autour du câble et ayant au repos une forme générale de poire présentant une partie renflée (6) du côté du boîtier et occupant, lorsque le câble est enroulé sur le tambour, tout l'espace compris entre le câble (1) et le tambour (3), la partie renflée de la cale ayant au repos un rayon au moins égal à la distance (d) qui sépare le câble du tambour, en sortie du boîtier, la cale (5) présentant également une extrémité effilée (8) ayant au point de contact (9) un diamètre de l'ordre de celui du câble (1), caractérisé en ce que les deux cales (10, 11) s'emboîtent l'une dans l'autre dans une partie centrale du boîtier, de sorte que les faces extérieures des cales se raccordent parfaitement dans la partie centrale.

2. Dispositif selon la revendication 1, caractérisé par le fait que chaque cale (5, 10) est constituée par un manchon en matériau résistant et souple présentant une compressibilité radiale très faible.

3. Dispositif selon la revendication 2, caractérisé par le fait que la partie de chaque manchon ne recouvrant pas le boîtier comporte des saignées radiales.

4. Dispositif selon la revendication 1, caractérisé par le fait que chaque cale est constituée par un empilage de cales élémentaires (16) enfilées sur le câble.

5. Dispositif selon la revendication 4, caractérisé par le fait que les cales élémentaires sont des rondelles (16) à faces parallèles et que lesdites cales élémentaires sont séparées par des cales entretoises (18) (fig. 9).

6. Dispositif selon la revendication 4, caractérisé par le fait que les cales élémentaires (19) sont des cylindres terminés de chaque côté par un tronc de cône (20, 21) (fig. 10).

7. Dispositif selon la revendication 4, caractérisé par le fait que les cales élémentaires sont en matériau résistant et souple présentant une compressibilité radiale très faible.

8. Dispositif selon la revendication 4, caractérisé par le fait que les cales élémentaires (16, 19) sont en métal.

9. Dispositif selon la revendication 1, caractérisé en ce que chaque cale est collée sur le câble.

10. Dispositif selon la revendication 1, caractérisé en ce que chaque cale est collée sur le câble et sur le boîtier.

11. Dispositif selon la revendication 1, caractérisé en ce que les cales sont cerclées sur le boîtier par des bandes de cerclage.

## Patentansprüche

1. Vorrichtung zum Schutz eines Unterwasser-Verbindungskabels am Ausgang eines Gehäuses gegen Beschädigung während des Ablaufens von der Trommel und der Rolle, wobei das Kabel direkt mit dem Gehäuse verbunden ist und die Vorrichtung auf jeder Seite des Gehäuses (2) aus einem Übergangsstück (5) besteht, das das Kabel (1) vom Gehäuseausgang bis zu einem Kontaktpunkt (9) des Kabels mit der Trommel (3) umgibt, wobei das Übergangsstück drehsymmetrisch um das Kabel ist und in der Grundstellung die allgemeine Form einer Birne aufweist, die einen verdickten Teil (6) auf der Seite des Gehäuses aufweist und den ganzen Zwischenraum zwischen dem Kabel (1) und der Trommel (3) ausfüllt, wenn das Kabel auf die Trommel aufgerollt ist, wobei der verdickte Teil des Übergangsstücks in der Grundstellung einen Radius aufweist, der mindestens gleich dem Abstand (d) zwischen dem Kabel am Ausgang des Gehäuses und der Trommel ist, wobei das Übergangsstück (5) außerdem ein schlankes Ende (8) aufweist, das am Kontaktpunkt (9) einen Durchmesser in der Größenordnung des Kabeldurchmessers (1) hat, dadurch gekennzeichnet, daß die beiden Übergangsstücke (10, 11) sich in einem zentralen Bereich des Gehäuses ineinander verschachteln, so daß die Außenseiten der Übergangsstücke in dem zentralen Bereich vollkommen ineinander übergehen.

2. Vorrichtung nach Anspruch 1, dadurch gekennzeichnet, daß jedes Übergangsstück (5, 10) aus einer Muffe aus einem widerstandsfähigen und biegsamen Material besteht, das eine sehr geringe radiale Kompressibilität aufweist.

3. Vorrichtung nach Anspruch 2, dadurch gekennzeichnet, daß der Teil jeder Muffe, der das Gehäuse nicht bedeckt, radiale Schlitze aufweist.

4. Vorrichtung nach Anspruch 1, dadurch gekennzeichnet, daß jedes Übergangsstück aus einem Stapel von auf das Kabel aufgefädelten Elementar-Übergangsstücken (16) besteht.

5. Vorrichtung nach Anspruch 4, dadurch gekennzeichnet, daß die Elementar-Übergangsstücke Scheiben (16) mit parallelen Seiten sind und daß die Elementar-Übergangsstücke durch Zwischenstücke (18) (Fig. 9) voneinander getrennt werden.

6. Vorrichtung nach Anspruch 4, dadurch gekennzeichnet, daß die Elementar-Übergangsstücke (19) Zylinder sind, die an jeder Seite in einem Kegelstumpf (20, 21) (Fig. 10) enden.

7. Vorrichtung nach Anspruch 4, dadurch gekennzeichnet, daß die Elementar-Übergangsstücke aus einem widerstandsfähigen und biegsamen Material sind, das eine sehr geringe radiale Kompressibilität aufweist.

8. Vorrichtung nach Anspruch 4, dadurch gekennzeichnet, daß die Elementar-Übergangsstücke (16, 19) aus Metall sind.

9. Vorrichtung nach Anspruch 1, dadurch gekennzeichnet, daß jedes Übergangsstück auf das Kabel geklebt ist.

10. Vorrichtung nach Anspruch 1, dadurch gekennzeichnet, daß jedes Übergangsstück auf das Kabel und auf das Gehäuse geklebt ist.

11. Vorrichtung nach Anspruch 1, dadurch gekennzeichnet, daß die Übergangsstücke auf das Gehäuse durch Bereifungsbänder aufgepreßt sind.

## Claims

1. A device for preventing damage of a submarine connection cable at the outlet of a casing during passage round the cable drum and over the davit, said cable being connected directly to the casing, the device being constituted on each side of the casing (2) by a chocking member (5) surrounding the cable (1) between its outlet from the casing and a point (9) of contact between the cable and the drum (3), said chocking member being of revolution about the cable and having a generally pear-shaped configuration when unstressed, presenting a swollen part (6) on the side of the casing and occupying all the space between the cable (1) and the drum (3) when the cable is wound on the drum, the swollen part of the chocking member when unstressed having a radius at least equal to the distance (d) between the cable and the drum at the outlet from the casing, the chocking member (5) further presenting a tapered end (8) having at the contact point (9) a diameter comparable with that of the cable (1), characterized in that the two chocking members (10, 11) are a nesting fit within one another over a central part of the casing so that the external surfaces of the chocking members join perfectly in the central part.

2. A device according to claim 1, characterized in that each chocking member (5, 10) is constituted by a sleeve of a strong and flexible material having very low compressibility in the radial direction.

3. A device according to claim 2, characterized in that the part of each chocking member not covering the casing comprises radial grooves.

4. A device according to claim 1, characterized in that each chocking member is constituted by a stack of elementary chocking members (16) threaded onto the cable.

5. A device according to claim 4, characterized in that the elementary chocking members are discs (16) with parallel faces, and in that said elementary chocking members are separated by spacer chocking members (18) (fig. 9).

6. A device according to claim 4, characterized in that the elementary chocking members (19) are cylinders terminated at each end by the frustum of a cone (20, 21) (fig. 10).

7. A device according to claim 4, characterized in that the elementary chocking members are of a strong and flexible material having very low compressibility in the radial direction.

8. A device according to claim 4, characterized in that the elementary chocking members (16, 19) are of metal.

9. A device according to claim 1, characterized in that each chocking member is bonded to the cable.

10. A device according to claim 1, characterized in that each chocking member is bonded to the cable and to the casing.

11. A device according to claim 1, characterized in that the chocking members are attached to the casing by encircling bands.

# FIG. 1

# FIG. 2

# FIG. 3

# FIG. 4

# FIG. 5

# FIG. 6

# FIG. 7

FIG.8

15

15

14

1

5

FIG.9

5

1  17

18

16

FIG.10

20

21

19